(19) Europäisches Patentamt
European Patent Office
Office européen des brevets

(11) **EP 2 219 275 A1**

(12) **EUROPEAN PATENT APPLICATION**
published in accordance with Art. 153(4) EPC

(43) Date of publication:
**18.08.2010 Bulletin 2010/33**

(51) Int Cl.:
*H02J 3/38* (2006.01)  *H02J 7/35* (2006.01)
*H02M 7/483* (2007.01)  *H02M 7/5387* (2007.01)
*H02M 3/158* (2006.01)

(21) Application number: 07858273.1

(22) Date of filing: **30.11.2007**

(86) International application number:
**PCT/ES2007/000697**

(87) International publication number:
**WO 2009/068698 (04.06.2009 Gazette 2009/23)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Ingeteam Energy, S.A.**
**31621 Sarriguren, Navarra (ES)**

(72) Inventors:
• **GONZALEZ, SENOSIAIN, Roberto**
**E-31621 Sarriguren (Navarra) (ES)**

• **COLOMA, CALAHORRA, Javier**
**E-31621 Sarriguren (Navarra) (ES)**
• **MARROYO, PALOMO, Luis**
**E-31621 Sarriguren (Navarra) (ES)**

(74) Representative: **Ungria Lopez, Javier et al**
**c/o UNGRIA Patentes y Marcas, S.A.,**
**Avda. Ramon y Cajal, 78**
**28043 Madrid (ES)**

(54) **ELECTRIC CIRCUIT FOR CONVERTING DIRECT CURRENT INTO ALTERNATING CURRENT**

(57)     The invention relates to a DC/AC conversion structure, preferably intended for photovoltaic systems, having a high yield across the entire input voltage range thereof, thereby guaranteeing that direct current is not injected into the alternating current network. In a preferred embodiment, the circuit includes six switching elements (T1 to T6) controlled by a command unit. In addition, the circuit includes a capacitive divider (C4 and C5) having the negative of the photovoltaic field connected to one of the ends thereof and a network terminal connected at the mid-point of same, which minimises problems of electromagnetic compatibility.

FIG. 7

Description

## OBJECT OF THE INVENTION

The invention, as stated in the heading of this description, relates to an electrical circuit for converting direct current electric power into alternating current electric power. The main field of application of the invention is the industry for the design of electronic devices, and more specifically the sector that designs power systems for the conversion of photovoltaic solar power. The invention can also be applied to other fields such as that of power generation using electro-chemical cells or other devices that provide direct current. The main object of the invention is to provide a DC/AC (direct current/alternating current) conversion structure especially designed for photovoltaic systems connected to the power grid, preferably transformerless, which manages to function with a wide range of input voltages, has a high yield across the entire voltage range and does not inject direct current into the grid; additionally minimising problems of electromagnetic compatibility (EMC).

## BACKGROUND OF THE INVENTION

Photovoltaic systems connected to the grid currently enjoy widespread recognition in our society. These facilities consist of a set of photovoltaic panels and an electronic converter, also known as an inverter, which adapts the power produced by the panels to the power injected into the power grid.

Traditionally, this type of facility has included a low frequency transformer between the inverter and the power grid. Said transformer guarantees galvanic Insulation between the facility and the grid and reduces problems of EMC. However, the output transformer has several disadvantages: since it operates at a low frequency, the transformer is very large and heavy, thereby significantly increasing the cost of the conversion stage, and therefore making the photovoltaic facility more expensive as a whole. Also, the transformer produces losses that reduce the converter's performance.

If the transformer is removed, the characteristics mentioned above improve. However, the galvanic insulation between the photovoltaic system and the grid is lost, deteriorating the system's performance in terms of EMC.

At the same time, if the transformer is removed, it must be guaranteed that direct current is not injected into the network so as to ensure that the transformers of the power company in question do not become saturated This "non-injection" can be achieved by means of a precise yet expensive and complex control existing in the current state of the technique. Another interesting alternative is the use of conversion structures that topologically guarantee the non-injection of direct current.

Other important features of any conversion structure used in a photovoltaic system are its yield, input voltage range and yield evolution according to input voltage. A conversion structure with a high yield will make it possible to maximise the current obtained from the system. On a separate note, the different photovoltaic panels available in the market and particular features of each facility mean that for similar ratings the voltages of the resulting photovoltaic field adopt very different values. Therefore, it is of interest to use conversion structures offering a wide range of input voltages, which can adapt to the various configurations that may be set up. At the same time, the yield of the conversion structure will depends on its input voltage, making it interesting to use conversion structures that maintain a high yield across the entire input voltage range.

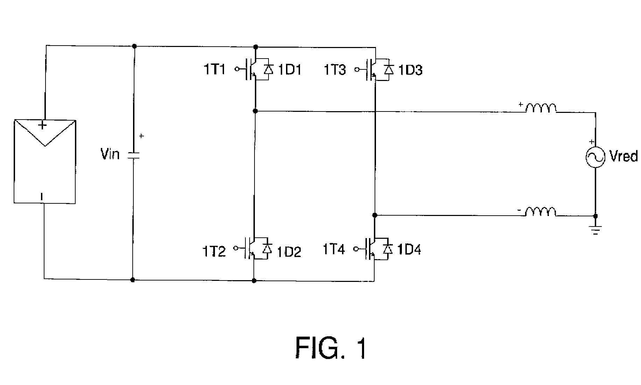

By using a transformer in photovoltaic systems It has been possible to use an H bridge with unipolar pulse width modulation (PWM), as a conversion structure which has proven to offer an Improved yield-complexity ratio. Figure 1 shows an H bridge. This structure comprises two parallel branches, each one with its respective pair of switches or switching elements in series (1T1, 1T2 and 1T3, 1T4) normally transistors with antiparallel diodes (1D1, 1D2, 1D3, 1D4). The use of unipolar PWM gives poor performance from the EMC point of view, meaning that its use is not recommended in transformerless systems.

One option for improving the inverter's performance in relation to EMC is to use bipolar modulation. However, bipolar modulation presents two disadvantages in relation to unipolar modulation. On the one hand, the current ripple in the coil with bipolar modulation is greater. On the other, in order to obtain the same current ripple frequency in the coil, switching must be at double the frequency, meaning that the switching losses are double. This, added to the fact that the semiconductors have to withstand the entire input voltage implies a reduction in the yield obtained using this structure. Since it is a reducing structure, the H bridge requires an input voltage that is higher than the grid's maximum voltage, which limits the input voltage range of this structure to voltages higher than the grid maximum.

For resolving the deficiencies of the abovementioned inverter structures, one must refer to the proposal of European Patent application EP1369985. The inverter circuit described in the aforesaid document is shown in Figure 2. This circuit improves the yield and reduces the current ripple in the coil in relation to the H bridge with bipolar modulation, maintaining good performance in relation to EMC. However, as in the case of the H bridge, given that it is a reducing structure, it requires an input voltage higher than the maximum grid voltage, which limits the input voltage range to voltages higher than the grid maximum.

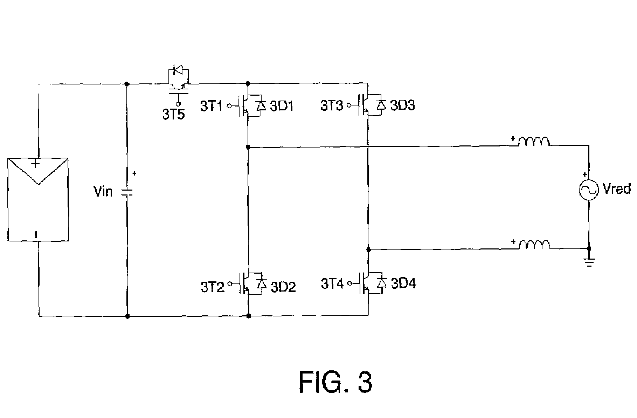

Another alternative for solving the deficiencies of the H bridge is the proposal of document US 2005/0286281. The inverter circuit that said document describes consists of an H bridge to which a fifth switch is added (3T5) between the positive input terminal and the upper elements of the H bridge, as shown in the diagram of Figure 3. The mode of functioning explained for the structure improves the yield and reduces the current ripple in the coil in relation to the H bridge with bipolar modulation maintaining a good performance in terms of EMC.

The structures described previously (H bridge with bipolar PWM, EP1369985 and US 2005/0286281) resolve the problems of EMC and offer good performance. However, they cannot topologically guarantee that direct current is not injected into the network.

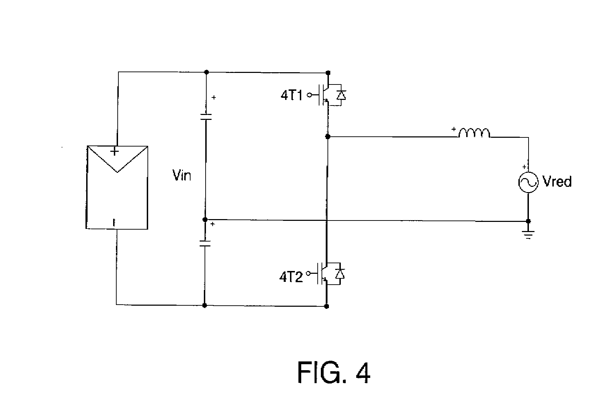

A well-known topology that guarantees the non-injection of direct current into the grid and that minimises EMC problems is the half-bridge. This involves a simple structure, consisting of two transistors only (4T1 and 4T2) with their respective diodes in antiparallel and an input capacitive divider as shown in Figure 4. The half bridge has the inconvenience of requiring a very high input voltage, since it must be at least twice the grid's maximum voltage. At the same time, the semiconductors must withstand the entire input voltage, meaning that they have large switching losses. This means that the yields obtained using this structure are low in comparison to those obtained using other DC/AC conversion structures such as the H bridge.

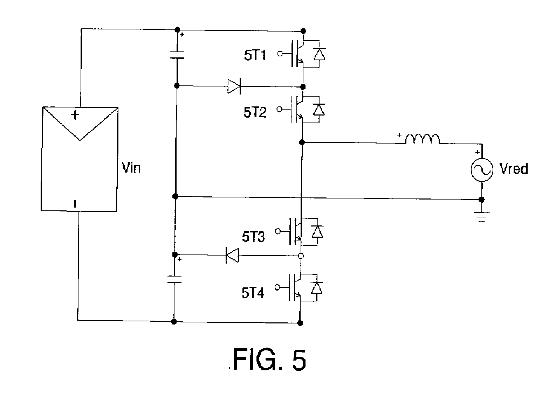

One option for reducing the losses presented by the half bridge converter, while maintaining its good performance in terms of EMC, is to use a multi-level structure such as the NPC half bridge (Neutral Point Clamped) (Figure 5). This structure has been proposed for transformerless photovoltaic systems where the installation's neutral as well as the panels have to be earthed, as described in US Patent application US 2005/0139259. The NPC half bridge consists of four transistors, with their respective diodes in antiparallel and two blocking diodes that restrict the voltage supported by the semiconductors to half the input voltage. In this way, although the NPC half bridge requires the same input voltage as the half bridge, semiconductors for half the voltage can be used, which considerably improves the yield as compared to the half bridge. In addition to the improved yield, the NPC half bridge reduces the current ripple in the coil to half. However, this structure cannot topologically guarantee that direct current is not injected into the network.

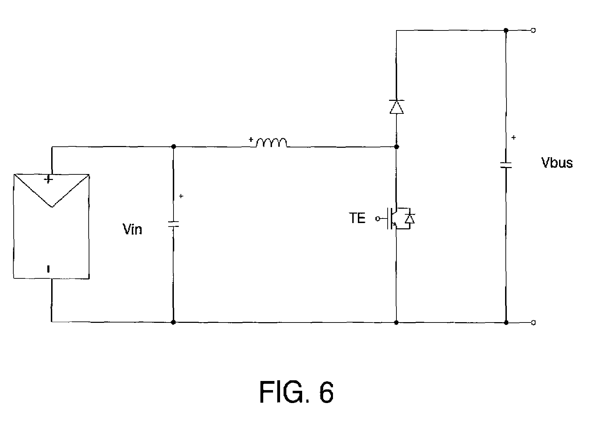

Both the half bridge and the NPC half bridge require high input voltages to function, limiting the converter's input voltage range. With a view to increasing the input voltage range a boost can be used as a DC/DC stage prior to these structures. This involves a simple structure comprising a single transistor (TE) and a diode (Figure 6) that switch at high frequency. However, the use of the boost considerably reduces the converter's performance, especially with low input voltages, since the semiconductors switch with the entire voltage of the direct current bus and the current is large.

## DESCRIPTION OF THE INVENTION

In order to achieve the objectives and avoid the inconveniences described in the preceding paragraphs, the invention consists of an electrical circuit for converting direct current electric power into alternating current electric power in photovoltaic systems, comprising a single phase inverter circuit that conditions and transforms direct current electric power into alternating current electric power.

Innovatively, according to the invention, the circuit in question comprises:

- Two direct current connections to which the direct current source is connected;
- A first temporary power accumulator connected between said direct current connections;
- A first branch with at least one first inductance connected to the positive of said direct current connections;
- A second branch consisting of two switching elements in series connected between that first inductance and the negative pole of those direct current connections;
- A third branch with two diodes in series connected to the abovementioned first branch;
- A second temporary power accumulator connected between said two diodes and said two switching elements;
- A fourth branch consisting of four switching elements in series connected between the third branch and the negative of the direct current connection;
- A third temporary power accumulator connected in parallel with the two middle ones of said four switching elements;
- A fifth branch with one diode in series with a resistance connected between the second and third accumulator;
- A fourth temporary power accumulator connected between the output to the power grid and the fourth branch;
- A fifth temporary power accumulator connected between the output or one of the alternating current connections and the negative of the direct current connections;
- Two alternating current connections to which the power grid is connected, a load designed to work with alternating current, or other elements;
- A sixth branch with at least one second inductance connected between the two middle ones of said four switching elements and the output to the grid;

in such a way that the fourth and fifth accumulator form a capacitive divider to which the negative of the photovoltaic field is connected at one of its ends and a network terminal in the mid-point, which minimises problems of electromagnetic compatibility.

In one of the embodiments of the invention a seventh branch can be incorporated into the circuit located between the second accumulator and the negative of the direct current connections, this seventh branch including a diode, a resistance and a sixth temporary power accumulator.

The abovementioned switching elements may consist of MOSFET or IGBT transistors, or other equivalents that adapt to this configuration.

In preferred embodiments of the invention, the aforesaid two switching elements and the aforesaid four switching elements are connected in antiparallel in relation to respective diodes. In alternative embodiments, said diodes may be omitted.

The aforesaid temporary power accumulators may be constituted by means of capacitive elements, ultracapacitors, batteries or combinations of these elements consisting of one or more accumulators connected in series on one or more branches in parallel.

In preferred embodiments of the invention, the switch-on commands of the aforesaid four switching elements are complementary two by two.

In preferred embodiments of the invention, the network's neutral terminal is connected between the fourth and fifth accumulator.

The resistance of the aforesaid fifth branch may be of 0 ohms.

In preferred embodiments of the invention, the second and third accumulator referred to above have the same capacity; the same occurs with the fourth and fifth accumulator.

An EMC (electromagnetic compatibility) filter can be placed at the input, output or distributed throughout the circuit.

The circuit may be connected to a command unit adapted to govern switching by means of a series of switch-on commands generated at its output and directed at the switching elements. These switch-on commands may be carried out through pulse width modulation (PWM). Also, the switch-on command of the switching element of the aforesaid fourth branch which connects to the negative of the direct current connections is given in preferred embodiments of the invention upon applying the circuit's corresponding input voltage.

The aforesaid command unit contains at least one calculation module comprising at least one programmable electronic device selected between a general-purpose processor, a microcontroller, a digital signal processor (DSP), an application-specific integrated circuit (ASIC) and a field programmable gate array (FPGA).

In the circuit of the invention the direct current connections may be connected to a source selected between a photovoltaic unit, an electro-chemical cell, or another source of direct current.

The circuit of the invention may be incorporated into a converter of the transformerless type and may also be fitted with galvanic insulation between the facility and the grid.

With the structure described herein, the circuit of the invention offers the main advantages of being able to work with a wide input voltage range, having a high yield across the entire voltage range, not injecting direct current into the network and minimising problems of electromagnetic compatibility (EMC).

Below, in order to contribute to a better understanding of this description and forming an integral part hereof, drawings are included which by way of illustration but not limitation represent the object of the invention, in addition to various circuits belonging to the state of the art.

## BRIEF DESCRIPTION OF THE DRAWINGS

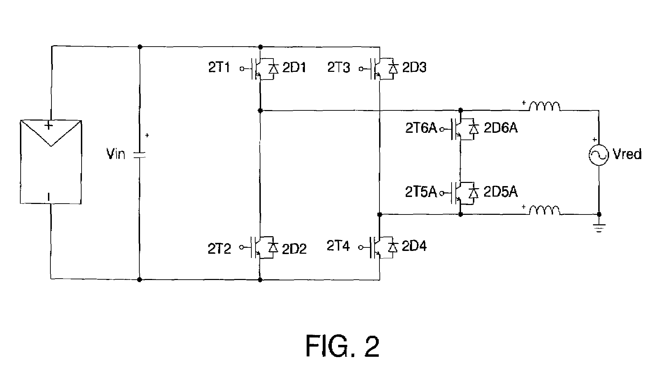

**Figures 1 to 6.** Show circuit diagrams of the circuits belonging to the state of the art. Figure 1 shows a diagram of the bridge structure in H. Figure 2 shows a diagram of the structure proposed in document EP1369985. Figure 3 shows a diagram of the structure proposed in document US 2005/0286281. Figure 4 shows a diagram of the half bridge structure with the installation's neutral connected to the midpoint of the capacitive divider. Figure 5 shows a diagram of the half-bridge NPC structure. Figure 6 shows a diagram of a DC/DC boost converter.

**Figure 7.** Provides a circuit diagram of a first embodiment of an electrical circuit for converting direct current electric power into alternating current electric power in photovoltaic systems, according to the invention.

**Figure 8.** Is the circuit of the preceding figure 7 showing a definition of the variables mentioned in the following section of this description.

**Figure 9.** Is the circuit of the previous figure 7 showing the circulation of current in a first functioning mode.

**Figures 10a, 10b, 10c and 10d.** Represent the circuit of the previous figure 7 showing the circulation of current in a second functioning mode.

**Figure 11.** Is the circuit of the previous figure 7 showing the circulation of current in a third functioning mode.

**Figure 12.** Represents the circuit diagram of a second embodiment of an electrical circuit for converting direct current electric power into alternating current electric power in photovoltaic systems according to the invention.

## DESCRIPTION OF ONE OR SEVERAL MODES OF EMBODIMENT OF THE INVENTION

What follows is a description of two examples of the invention quoting references from the drawings.

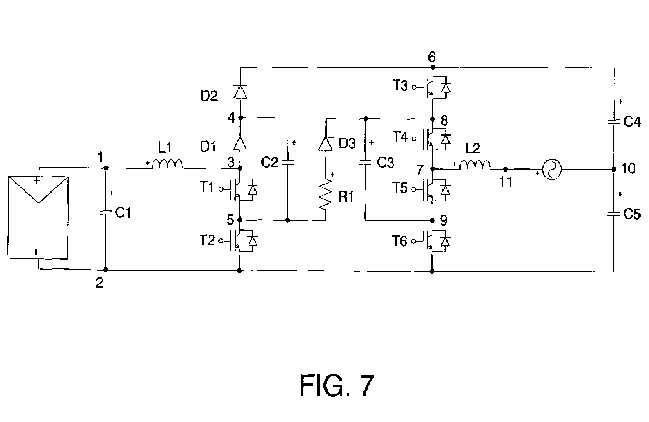

Thus, the first embodiment of the circuit of the invention appears in figures 7 to 11.

As can be appreciated from figure 7 the circuit of this first embodiment comprises:

- Two direct current connections, points 1 and 2, to which the corresponding source of direct current is connected;
- A first temporary power accumulator C1 connected between points 1 and 2;
- A first branch with at least one first inductance L1 connected between points 1 and 3 of figure 7:
- A second branch consisting of two switching elements in series, T1 and T2, connected between points 3 and 2 shown In said figure 7;
- A third branch with two diodes in series, D1 and D2, connected between points 3 and 6 of figure 7:
- A second temporary power accumulator C2, connected between points 4 and 5 of figure 7:
- A fourth branch consisting of four switching elements in series, T3, T4, T5 and T6, connected between points 6 and 2 of figure 7;
- A third temporary power accumulator C3, connected between points 8 and 9 of figure 7;
- A fifth branch with one diode D3 in series with a resistance R1 and connected between points 5 and 8 of figure 7;
- A fourth temporary power accumulator C4 connected between points 6 and 10 of figure 7;
- A fifth temporary power accumulator C5 connected between points 2 and 10 of figure 7;
- Two alternating current connections 10 and 11, to which the power grid is connected, a load designed to work with alternating current, or other elements;
- And a sixth branch with at least one second inductance L2 connected between points 7 and 11 of figure 7;

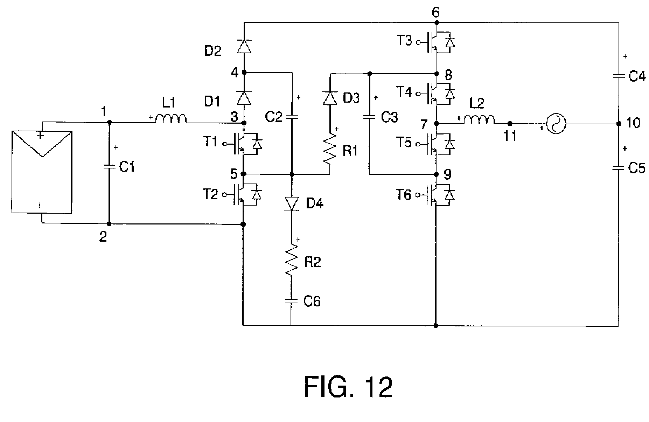

The second embodiment of the invention, shown in figure 12 is in every way similar to the first one except that between the second accumulator C2 and the negative of the direct current connections 2 a seventh branch is incorporated which includes a diode D4, a resistance R2 and a sixth temporary power accumulator C6, as may be appreciated from figure 12.

The switching elements T1 to T6 may be MOSFET, IGBT or any other type of transistor that adapts to the corresponding circuit configuration. Also, said elements T1 to T6 have respective diodes connected in antiparallel as may be appreciated from figures 7 to 12.

At the same time, accumulators C1 to C6 may be capacitive elements, ultracapacitors, batteries or combinations thereof.

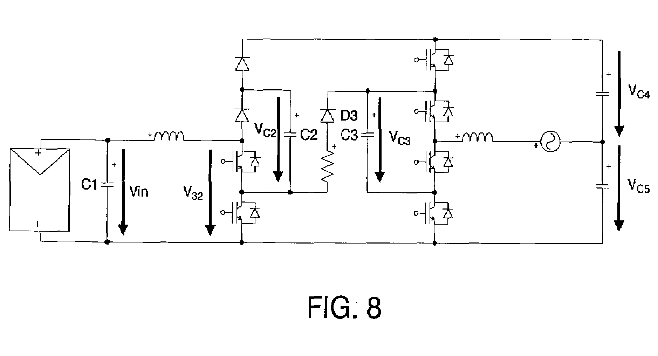

Figure 8 shows some variables used in the description of the functioning of the circuit of figure 7.

Thus, moving onto the description of said functioning, the voltage that is supported by the semiconductors is related to the voltage of the condensers C2, C3, C4 and C5. For the converter to function properly, the voltages of C2 (VC2), C3 (VC3), C4 (VC4), and C5 (VC5) must be equal and have a value higher than the maximum grid voltage. In order to facilitate the description of the converter, this voltage will be referred to as VC. If VC2=VC3=VC4=VC5, the semiconductors used will only see the voltage VC, except for D3, which will see double the voltage. To avoid the semiconductors supporting voltages higher than those they have been scaled for, it is necessary to guarantee in all of the structure's functioning modes that the voltage of these condensers is the same.

At the same time, to minimise the risk of electric shock for persons entering inside the equipment, it is advisable to use discharge resistances in parallel with the capacitive elements that store high voltage energy (C1, C2, C3, C4 and C5) in order to guarantee the discharge thereof within a determined period. The use of these discharge resistances is compulsory in certain countries such as the United States, as specified in standard UL1741. With a view to simplifying the description of the topology, these resistances do not appear in the figures. However, their discharge effect must be taken into consideration during the functioning of the converter, especially with regards to the need to guarantee that the voltages of C2, C3, C4 and C5 are equal, given that being in parallel the discharge will occur at all times.

With regards to the functioning of the circuit of figure 7, four functioning modes can be explained:

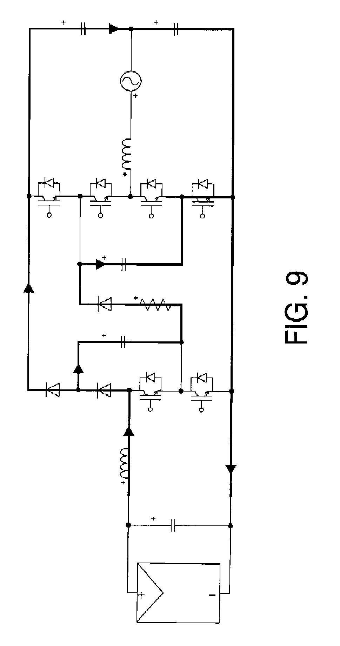

- The first mode of functioning corresponds to the moment the direct power source is connected to the converter. At this moment, condensers C4 and C5 load through diodes D1 and D2 which go into the conducting state. In these conditions, the voltage supported by T2 is $V_{in} - V_{C2} = V_{in}$, since C2 is discharged ($V_{in}$ being the input voltage). Although C2 could be loaded through resistive dividers, this method would be slow and would make it necessary to overscale T2 in voltage, deteriorating the structure's yield (the nominal working voltage of the semiconductors will be $V_C$ and the input voltage may be more than twice this value). To avoid overscaling T2 C2 has to load at the same time as C4 and C5. To achieve this, when an input voltage is applied to the converter T6 switches on. In this way, the current closes through D1, D2, C4 and C5 and through C2, D3 and C3, loading all the capacities at the same time as may be appreciated from figure 9.

- The second mode of functioning corresponds to the converter's start-up for input voltages of less than $2V_C$. During this time, the input current (coil L1) is controlled, loading capacities C2, C3, C4 and C5 at the nominal working voltage $V_C$. These actions are carried out by means of the elements D1, D2, D3, T1, T2 and T6. This state of functioning makes it possible to obtain the necessary conditions to be able to connect the converter to the grid. During this state of functioning T6 remains switched on, while T1 and T2 switch at high frequency, controlling in this way the current in the input coil and the voltages of C2, C3, C4 and C5. This control can be achieved, for example, by means of a pulse width modulation (PWM). The control of the current in the input coil is carried out based on the input voltage ($V_{in}$) and the voltage of point 3 of figure 7 ($V_{32}$). The possible states of functioning are:

a. T1, T2 and T6 switched on, meaning that $V_{32}$ = 0.

b. T1 and T6 switched on, meaning that $V_{32}$ = $V_{C4}$ + $V_{C5}$ - $V_{C2}$ = $V_C$

c. T2 and T6 switched on, meaning that $V_{32}$ = $V_{C2}$ = $V_C$

d. T1 and T2 switched off and T6 switched on, meaning that $V_{32}$ = $V_{C4}$ + $V_{C5}$

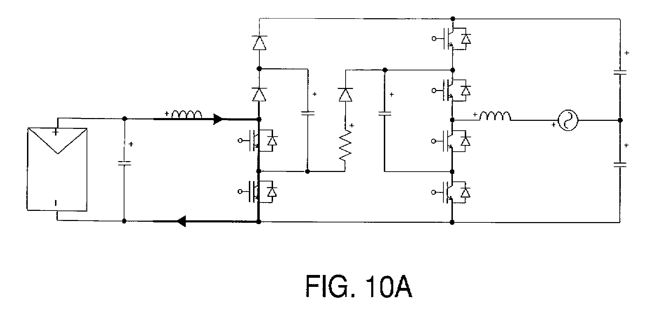

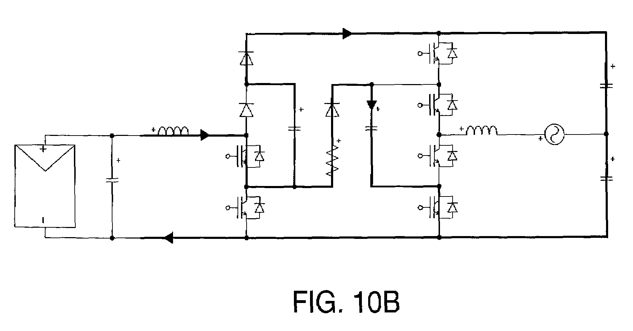

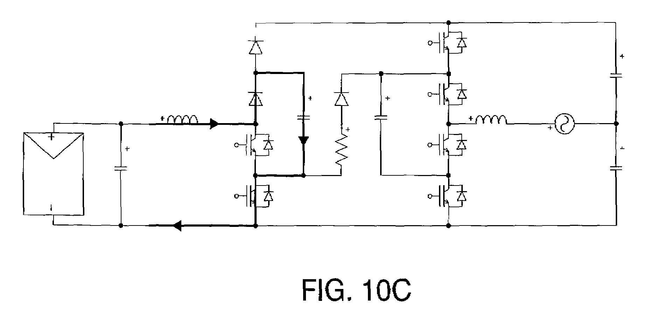

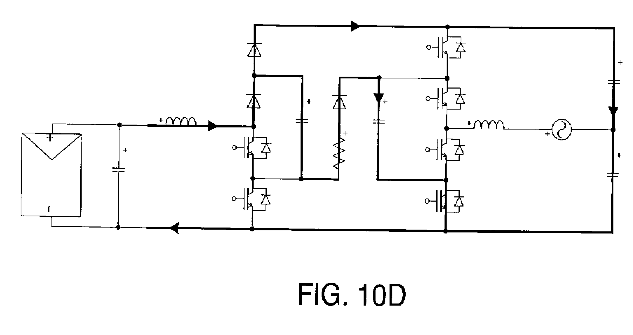

By way of illustration, Figures 10a, 10b, 10c, and 10d show the current circulation in these states of functioning that have just been described.

The voltages of C2, C4 and C5 are controlled based on the conduction times of T1 and T2 and the power in the input coil. However, the voltage of C3 is controlled through D2, D3 and T6 in such a way that when D2 conducts (T1 and T6 switched on or T1 and T2 switched off and T6 switched on) a current circulates through D3 which maintains $V_{C2}$ + $V_{C3}$ = $V_{C4}$ + $V_{C5}$ as may be seen in figures 10b and 10d. In this way it is guaranteed that even if discharge resistances are introduced, the voltage of condenser C3 will be the same as the rest. The function of resistance R1 is to dampen the current peaks that may appear in D3, thus reducing the electrical disturbances provoked thereby.

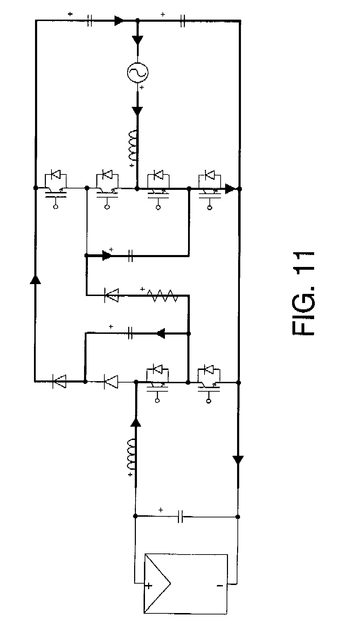

- The third functioning mode corresponds to the functioning of the converter with input voltages below $2V_C$ once the start-up period is over. In this mode of functioning, the branch consisting of D1, D2, T1 and T2 is responsible for controlling the current In the input coil, maintaining the voltage in capacities C2, C4 and C5 at a value of $V_C$ while the branch consisting of T3, T4, T5 and T6 is responsible for current control at the output current. Control of the current at the input coil and of the voltages of C2, C4 and C5 is achieved by means of controlling the switch-on times of T1 and T2, which switch at high frequency. This control can be carried out, for example, by means of pulse width modulation (PWM). Control of the current at the output coil and of the voltage of capacity of C3 is achieved by controlling the switch-on and switch-off times of T3, T4, T5 and T6. The switch-on commands of transistors T3-T6 and T4-T5 are complementary and are generated by PWM. This results in the following combinations: if T3-T4 or T5-T6 are switched on simultaneously, then the voltage +$V_C$ or -$V_C$ is applied to points 7 and 10; the zero value is obtained with the combinations T3-T5 and T4-T6. During periods in which D2 conducts and T6 is switched on simultaneously, the circulation of current occurs by C2, R1 and D3 through C3 and T6, which helps to control the voltage of the condensers C2 and C3, maintaining $V_{C2}$ + $V_{C3}$ = $V_{C4}$ + $V_{C5}$ (figure 10d). Figure 11 shows by way of illustration the circulation of currents in a state of functioning where T1, T5 and T6 remain switched on and the output current is negative.

- The fourth functioning mode corresponds to the functioning of the converter for input voltages of more than $2V_C$. In these conditions T1 and T2 are switched off and D1 and D2 conduct permanently. T3, T4, T5 and T6 switch at high frequency, the current in the output coil controlling the voltage in C3. In these conditions, the voltage control of C2, which due to the condenser's own internal resistance and the discharge resistances tends to discharge, is carried out by means of D3. This diode allows voltage $V_{C2}$ to be maintained at a value $V_C$ since every time T6 is switched on, D3 will conduct, maintaining $V_{C2}$ + $V_{C3}$ = $V_{C4}$ + $V_{C5}$.

For the structure to function correctly, the capacities C2 and C3, and C4 and C5 must be identical (C2 = C3 and C4 = C5).

The control signals of the switches employed are determined by a command unit that has at least one calculation unit and a logic for implementing the control strategy. The calculation module comprises at least one electronic programmable device, which may be a general purpose microprocessor, a microcontroller, a digital signal microprocessor (DSP), and application-specific integrated circuit (ASIC), a field programmable gate array (FPGA) or any combination of the foregoing, serving to establish the updated values of the energy source working point.

The proposed structure presents the particular feature of having a capacitive divider formed by C4 and C5, to which the negative of the photovoltaic field is connected at one of its ends, and a network terminal at the mid-point, thereby minimising EMC problems.

On a separate note, the proposed inverter topologically guarantees that direct current is not injected into the network by means of controlling the voltage of the mid-point of the capacitive divider. In normal operating conditions, if the current injected into the network has no direct component, the mean value of the voltage at the mid-point remains constant. However, if a direct component should appear, a variation in the mean value of the voltage at the mid-point of the capacitive divider would occur, determined by the equation:

$$\Delta Vpm = \tfrac{1}{2} C \times \overline{I_{net}} \times \Delta T,$$

where

$\Delta Vpm$ = voltage variation at the mid-point

$\overline{I_{net}}$ = mean value of the current injected into the network (when the direct component appears)

$\Delta T$ = time interval

C = value of the capacitive divider.

Therefore, by controlling the voltage of the mid-point so that its mean value remains constant It is guaranteed that direct current is not injected into the network.

The proposed conversion structure works across a wide input voltage range, reaching voltages of more than twice the maximum grid voltage. However, the maximum voltage supported by the semiconductors is half the maximum input voltage, except for D3 which will have to support the entire input voltage. This makes it possible to use lower voltage semiconductors, improving the converter's efficiency in respect of the structures shown in the state of the art. The improved yield is obtained across the input voltage range.

It can be said that in this example of the invention a new DC/AC conversion structure is provided which topologically guarantees that direct current is not injected into the network, minimising the problems of EMC and operating across a wide input voltage range, offering a high conversion efficiency, maintained across the range of input voltages.

A second alternative for implementing the invention is the second embodiment shown in figure 12 and whose structure is similar to the first embodiment of figure 7, except for the fact that a branch is added connected between points 5 and 2 of said figure 7, as can be seen from figure 12. Thus, this second embodiment of figure 12, refers to a single phase inverter circuit with the structure of the first embodiment and the aforesaid branch, which has a diode or similar device D4 in series with a resistance R2 and a temporary power accumulator C6, which may consist of one or more accumulators connected in series on one or more branches in parallel. This branch of the second embodiment, new in relation to the first embodiment, helps to pre-load C2 at the moment voltage is applied to the converter.

In any of the two embodiments, that of figure 7 and that of figure 12, a command unit can be added with a similar function to that of any of the known potential command strategies for known converters, which basically consist of commanding through a series of switch-on signals generated at the output of said command unit, the switching of all the switching elements.

**Claims**

1. **ELECTRICAL CIRCUIT FOR CONVERTING DIRECT CURRENT ELECTRIC POWER INTO ALTERNATING CURRENT ELECTRIC POWER,** consisting of a single phase inverter circuit that conditions and transforms direct current electric power into alternating current electric power, and **characterised in that** it comprises:

- two direct current connections (1, 2) to which the direct current source is connected;
- a first temporary power accumulator (C1) connected between the direct current connections (between points one and two);
- a first branch with at least one first inductance (L1) connected to the positive (1) of said connections (between points one and three):
- a second branch consisting of two switching elements in series (T1 and T2) connected between said inductance (L1) and the negative of said direct current connections (between points three and two);
- a third branch with two diodes in series (D1 and D2) connected to the aforesaid first branch (between points three and six);
- a second temporary power accumulator (C2) connected between said two diodes and said two switching elements (between points four and five);
- a fourth branch consisting of four switching elements in series (T3, T4, T5 and T6) connected between the third branch and the negative of the direct current connection (between points six and two);
- a third temporary power accumulator (C3) connected in parallel with the two middle ones (T4 and T5) of said four switching elements (between points eight and nine);
- a fifth branch with one diode (D3) in series with a resistance (R1) connected between the second and third accumulator (C2 and C3), (between points five and eight);
- a fourth temporary power accumulator (C4) connected between one of the alternating current connections and the fourth branch (between points six and ten);
- a fifth temporary power accumulator (C5) connected between the output to the network and the negative of the direct current connections (between points two and ten);
- two alternating current connections (10, 11) to which the power grid is connected, a load designed to work with alternating current, or other elements;
- a sixth branch with at least one second inductance (L2) connected between the two middle ones of said four switching elements and the output to the network (between points seven and eleven).

2. **ELECTRICAL CIRCUIT FOR CONVERTING DIRECT CURRENT ELECTRIC POWER INTO ALTERNATING CURRENT ELECTRIC POWER,** according to claim 1, **characterised in that** between the second accumulator (C2) and the negative of the direct current connection (2) a seventh branch is incorporated, which includes a diode (D4), a resistance (R2) and a sixth temporary power accumulator (C6).

3. **ELECTRICAL CIRCUIT FOR CONVERTING DIRECT CURRENT ELECTRIC POWER INTO ALTERNATING CURRENT ELECTRIC POWER,** according to claim 1, **characterised in that** said switching elements (T1 to T6) consist of MOSFET or IGBT transistors.

4. **ELECTRICAL CIRCUIT FOR CONVERTING DIRECT CURRENT ELECTRIC POWER INTO ALTERNATING CURRENT ELECTRIC POWER,** according to claim 1, **characterised in that** the aforesaid two switching elements (T1 and T2) are connected in antiparallel in respect of said diodes.

5. **ELECTRICAL CIRCUIT FOR CONVERTING DIRECT CURRENT ELECTRIC POWER INTO ALTERNATING CURRENT ELECTRIC POWER,** according to claim 1, **characterised in that** the aforesaid four switching elements (T3, T4, T5 and T6) are connected in antiparallel to respective diodes.

6. **ELECTRICAL CIRCUIT FOR CONVERTING DIRECT CURRENT ELECTRIC POWER INTO ALTERNATING CURRENT ELECTRIC POWER,** according to claim 1, **characterised in that** the temporary power accumulators (C1 to C5) consist of capacitive elements, ultracapacitors, batteries or combinations of these elements formed by one or more accumulators connected in series on one or more branches in parallel.

7. **ELECTRICAL CIRCUIT FOR CONVERTING DIRECT CURRENT ELECTRIC POWER INTO ALTERNATING CURRENT ELECTRIC POWER,** according to claim 2, **characterised in that** the sixth temporary power accumulator (C6) consists of capacitive elements, ultracapacitors, batteries or combinations of these elements formed by one or more accumulators connected in series on one or more branches in parallel.

8. **ELECTRICAL CIRCUIT FOR CONVERTING DIRECT CURRENT ELECTRIC POWER INTO ALTERNATING CURRENT ELECTRIC POWER,** according to claim 1, **characterised in that** the switch-on commands of the aforesaid four switching elements (T3 to T6) are complementary two by two (T3 complementary to T6, T4 complementary to T5).

9. **ELECTRICAL CIRCUIT FOR CONVERTING DIRECT CURRENT ELECTRIC POWER INTO ALTERNATING CURRENT ELECTRIC POWER,** according to claim 1, **characterised in that** the neutral terminal of the network is connected between the fourth and fifth accumulator (C4 and C5) (to point ten).

10. **ELECTRICAL CIRCUIT FOR CONVERTING DIRECT CURRENT ELECTRIC POWER INTO ALTERNATING CURRENT ELECTRIC POWER,** according to claim 1, **characterised in that** the resistance of the fifth branch (R1) is of 0 ohms.

11. **ELECTRICAL CIRCUIT FOR CONVERTING DIRECT CURRENT ELECTRIC POWER INTO ALTERNATING CURRENT ELECTRIC POWER,** according to claim 1, **characterised in that** the second and third accumulator (C2 and C3) have the same capacity.

12. **ELECTRICAL CIRCUIT FOR CONVERTING DIRECT CURRENT ELECTRIC POWER INTO ALTERNATING CURRENT ELECTRIC POWER,** according to claim 1. **characterised in that** the fourth and fifth accumulator (C4 and C5) have the same capacity.

13. **ELECTRICAL CIRCUIT FOR CONVERTING DIRECT CURRENT ELECTRIC POWER INTO ALTERNATING CURRENT ELECTRIC POWER,** according to claim 1, **characterised in that** an EMC (electromagnetic compatibility) filter is placed at the input, output or distributed throughout the circuit.

14. **ELECTRICAL CIRCUIT FOR CONVERTING DIRECT CURRENT ELECTRIC POWER INTO ALTERNATING CURRENT ELECTRIC POWER,** according to claim 1, **characterised in that** said circuit is connected to a command unit adapted to govern switching by means of a series of switch-on signals generated at its output and directed at the switching elements (T1 to T6).

15. **ELECTRICAL CIRCUIT FOR CONVERTING DIRECT CURRENT ELECTRIC POWER INTO ALTERNATING CURRENT ELECTRIC POWER,** according to claim 14, **characterised in that** the switch-on signals of the switching elements (T1 to T6) are carried out through pulse width modulation (PWM).

16. **ELECTRICAL CIRCUIT FOR CONVERTING DIRECT CURRENT ELECTRIC POWER INTO ALTERNATING CURRENT ELECTRIC POWER,** according to claim 1, **characterised in that** the switch-on signal of the switching element (T6) connected to the direct current negative pole (2) is carried out upon applying input voltage ($V_{in}$).

17. **ELECTRICAL CIRCUIT FOR CONVERTING DIRECT CURRENT ELECTRIC POWER INTO ALTERNATING CURRENT ELECTRIC POWER,** according to claim 14 or 15, **characterised in that** the command unit has at least one calculation module, which comprises at least one programmable electronic device selected between a general purpose processor, a microcontroller, a digital signal processor (DSP), an application-specific integrated circuit (ASIC) and a field programmable gate array (FPGA).

18. **ELECTRICAL CIRCUIT FOR CONVERTING DIRECT CURRENT ELECTRIC POWER INTO ALTERNATING CURRENT ELECTRIC POWER,** according to any of the preceding claims, **characterised in that** a source is connected to the direct current connections (1, 2) selected between a photovoltaic unit, an electro-chemical cell unit, or other source of direct current.

19. **ELECTRICAL CIRCUIT FOR CONVERTING DIRECT CURRENT ELECTRIC POWER INTO ALTERNATING CURRENT ELECTRIC POWER,** according to any of the preceding claims, **characterised in that** it is incorporated into a converter of the transformerless type.

20. **ELECTRICAL CIRCUIT FOR CONVERTING DIRECT CURRENT ELECTRIC POWER INTO ALTERNATING CURRENT ELECTRIC POWER,** according to any of the preceding claims, **characterised in that** it is fitted with galvanic insulation between the installation and the grid.

FIG. 1

FIG. 2

FIG. 3

FIG. 4

FIG. 5

FIG. 6

FIG. 7

FIG. 8

FIG. 9

FIG. 10A

FIG. 10B

FIG. 10C

FIG. 10D

FIG. 11

FIG. 12

## INTERNATIONAL SEARCH REPORT

| International application No. |
| --- |
| PCT/ ES 2007/000697 |

**A. CLASSIFICATION OF SUBJECT MATTER**

see extra sheet

According to International Patent Classification (IPC) or to both national classification and IPC

**B. FIELDS SEARCHED**

Minimum documentation searched (classification system followed by classification symbols)

H02J+, H02M+, H01L31+

Documentation searched other than minimum documentation to the extent that such documents are included in the fields searched

Electronic data base consulted during the international search (name of data base and, where practicable, search terms used)

INVENES,EPODOC, WPI, IEEE, ELSEVIER

**C. DOCUMENTS CONSIDERED TO BE   RELEVANT**

| Category* | Citation of document, with indication, where appropriate, of the relevant passages | Relevant to  claim No. |
| --- | --- | --- |
| A | RODRIGUEZ et al. Multilevel inverters: a survey of topologies, controls, and applications. Industrial Electronics, IEEE Transactions on August of 2002, volume 49, issue 4, pages 724 - 738, mainly pág. 726, paragraph B, figure 3a. ISSN: 0278-0046. INSPEC Accession Number: 7356026. Digital Object Identifier: 10. 1109/TIE.2002.801052 | 1-20 |
| A | AU729687B B2 (HEGGLUN IAN VICTOR) 08.02.2001, figure 1a, p. 6 line 19-p. 7 line 5. | 1-20 |
| A | US2005127853 A1 (SU) 16.06.2005, figure 5, paragraph 38. | 1-20 |
| A | US20050141248 A1 (MAZUMDER et al.) 30.06.2005, the whole document. | 1-20 |

☒  Further documents are listed in the continuation of Box C.          ☒  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
| --- | --- |
| 28 July 2008        (28.07.2008) | (05-08-2008) |
| Name and mailing address of the ISA/ <br> O.E.P.M. <br><br> Paseo de la Castellana, 75 28071 Madrid, España. <br> Facsimile No.   34 91 3495304 | Authorized officer <br><br> P. Valbuena Vázquez <br><br> Telephone No. +34 91 349 85 62 |

Form PCT/ISA/210 (second sheet) (July 2008)

**INTERNATIONAL SEARCH REPORT**

| International application No. |
|---|
| PCT/ES 2007/000697 |

| C (continuation). | DOCUMENTS CONSIDERED TO BE   RELEVANT | |
|---|---|---|
| Category* | Citation of documents, with indication, where appropriate, of the relevant passages | Relevant to claim No. |
| A | US20060226816 A1 (WAI et al.) 12.10.2006, the whole document | 1-20 |

Form PCT/ISA/210 (continuation of second sheet) (July 2008)

## INTERNATIONAL SEARCH REPORT

Information on patent family members

International application No.

PCT/ ES 2007/000697

| Patent document cited in the search report | Publication date | Patent family member(s) | Publication date |
|---|---|---|---|
| AU 729687 B | 08.02.2001 | AU 7510098 A | 21.01.1999 |
| US 2005127853 A | 16.06.2005 | US 6969967 B | 29.11.2005 |
| US 2005141248 A | 30.06.2005 | US 2006062034 A<br>US 7372709 B | 23.03.2006<br>13.05.2008 |
| US 2006226816 A | 12.10.2006 | US 7161331 B | 09.01.2007 |

Form PCT/ISA/210 (patent family annex) (July 2008)

**INTERNATIONAL SEARCH REPORT**

International application No.

PCT/ ES 2007/000697

CLASSIFICATION OF SUBJECT MATTER

*H02J 3/38* (2006.01)
*H02J 7/35* (2006.01)
*H02M 7/483* (2007.01)
*H02M 7/5387* (2007.01)
*H02M 3/158* (2006.01)

Form PCT/ISA/210 (extra sheeet) (July 2008)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1369985 A
- US 20050286281 A

- US 20050139259 A